# EUROPEAN PATENT APPLICATION

(11) **EP 4 799 909 A1**
(43) Date of publication of application: **02.09.2026**
(21) Application number: 24881497.2
(22) Date of filing: 16.10.2024
(51) Int. Cl.: B62D 21/02

(54) **SUBFRAME OF VEHICLE, VEHICLE BODY ASSEMBLY OF VEHICLE, AND VEHICLE**

(30) Priority: 23.10.2023 CN 202311379470
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: SI, Haoran, Hangzhou, Zhejiang 310051 (CN); HUANG, Xiaoqin, Hangzhou, Zhejiang 310051 (CN); LIU, Shuaichen, Hangzhou, Zhejiang 310051 (CN); XIE, Zhiqiang, Hangzhou, Zhejiang 310051 (CN); SI, Kaizhong, Hangzhou, Zhejiang 310051 (CN)
(74) Representative: Range, Christopher William
(86) International application number: PCT/CN2024/125370
(87) International publication number: WO 2025/087132

(57) **Abstract**

A subframe (100) of a vehicle, a vehicle body assembly of a vehicle, and a vehicle. The subframe (100) comprises: a first cross member (10) and a second cross member (20) that are spaced apart from each other in a first direction of the subframe (100), the first cross member (10) being located in front of the second cross member (20); a plurality of subframe side members (30) that are all connected to the first cross member (10) and the second cross member (20), at least one subframe side member (30) being arranged to penetrate through the first cross member (10); and connecting bases (50) that are fixedly connected to both the first cross member (10) and respective subframe side members (30), the connecting bases (50) further being adapted to fixedly connect to vehicle body side members (41) of the vehicle, and the connecting bases (50) being used for mounting of a suspension.

## Description

### CROSS-REFERENCE TO RELATED APPLICATION

This application is based on and claims priority to Chinese patent application No. 202311379470.9, filed on October 23, 2023, the entire contents of which are incorporated herein by reference.

### FIELD

The present disclosure relates to but is not limited to the field of vehicle technologies, and more particularly, to a subframe of a vehicle, a vehicle body assembly having the subframe, and a vehicle having the vehicle body assembly.

### BACKGROUND

A vehicle is provided with a mounting support at a front subframe of the vehicle, and a powertrain of the vehicle is mounted at the mounting support through a suspension. The existing front subframe has insufficient rigidity and structural strength, resulting in transmission of vibration and noise from the powertrain to a passenger compartment, thus greatly reducing riding comfort of passengers. In addition, connection rigidity between a subframe longitudinal member and a first cross member is insufficient, which further degrades safety performance of the subframe.

### SUMMARY

The following presents an overview of the subject matter described in detail herein. The overview is not intended to limit protection scopes of claims.

An objective of the present disclosure is to provide a subframe of a vehicle, which can enhance rigidity of the subframe and can effectively suppress transmission of vibration and noise from a powertrain to a passenger compartment, improving riding comfort of passengers.

The present disclosure further provides a vehicle body assembly, having the above-described subframe, of a vehicle.

The present disclosure further provides a vehicle having the above-described vehicle body assembly.

According to the embodiments of the present disclosure, the subframe of the vehicle includes: a first cross member and a second cross member that are spaced apart from each other in a first direction of the subframe, the first cross member being located at a front side of the second cross member; a plurality of subframe longitudinal members arranged in a second direction of the subframe, each of the plurality of subframe longitudinal members being connected to the first cross member and the second cross member, at least one of the plurality of subframe longitudinal members penetrating the first cross member, and the first direction being perpendicular to the second direction; and a connection base fixedly connected to both the first cross member and a corresponding one of the plurality of subframe longitudinal members, where the connection base is further adapted to be fixedly connected to a vehicle body longitudinal member of the vehicle, and the connection base is configured to have a suspension mounted thereon.

According to the embodiments of the present disclosure, the subframe of the vehicle can be in a frame-type structure by connecting the plurality of subframe longitudinal members between the first cross member and the second cross member, thus improving fatigue strength and the rigidity of the subframe. Also, at least one of the plurality of subframe longitudinal members penetrates the first cross member, which can also improve the fatigue strength and the rigidity of the subframe. By fixedly connecting the connection base to the first cross member, the corresponding subframe longitudinal member, and the vehicle body longitudinal member of the vehicle, a rigid fixed connection structure can be formed, to improve the rigidity of the subframe and further enhance safety performance of the vehicle. In addition, after the powertrain of the vehicle is mounted to the connection base through the suspension, the transmission of the vibration and the noise from the powertrain to the passenger compartment can be effectively suppressed, thus improving the riding comfort of the passengers.

According to some embodiments of the present disclosure, a plurality of connection bases are provided. The plurality of connection bases are sequentially arranged in the second direction and fixedly disposed at the first cross member. The plurality of connection bases are connected in one-to-one correspondence with the plurality of subframe longitudinal members.

According to some embodiments of the present disclosure, each of the plurality of subframe longitudinal members penetrates the first cross member. The connection base is at least partially located above an overlapping region where the corresponding subframe longitudinal member overlaps the first cross member.

According to some embodiments of the present disclosure, in a third direction of the subframe, an orthographic projection of the subframe longitudinal member overlaps an orthographic projection of the first cross member to form a projection overlapping region. An orthographic projection of the connection base overlaps the projection overlapping region. The third direction, the first direction, and the second direction are perpendicular to each other.

According to some embodiments of the present disclosure, the connection base defines a cavity structure. In the second direction, an inside end wall of the connection base serves as a mounting end wall for mounting the suspension, the mounting end wall being perpendicular to the first cross member.

According to some embodiments of the present disclosure, the mounting end wall has a suspension mounting hole, and the cavity structure has a mounting ring in the cavity structure. The mounting ring is disposed at the mounting end wall and arranged to correspond to the suspension mounting hole. The mounting ring has an internal thread on an inner circumferential wall of the mounting ring.

According to some embodiments of the present disclosure, in the second direction, the connection base is provided with a mounting portion at an outer end of the connection base, the mounting portion being connected to the vehicle body longitudinal member.

According to some embodiments of the present disclosure, the mounting portion is a mounting tube.

According to some embodiments of the present disclosure, in the first direction, a front end wall of the connection base is in an arc shape.

According to some embodiments of the present disclosure, in the second direction, a cross-sectional area of the connection base decreases gradually from an inner side of the connection base to an outer side of the connection base.

According to some embodiments of the present disclosure, a cross-section of the connection base is of a polygonal shape.

According to some embodiments of the present disclosure, the connection base has an avoidance groove structure. The avoidance groove structure is adapted to correspond to a fastener for connecting the suspension, and the avoidance groove structure is configured to avoid a disassembly tool.

According to some embodiments of the present disclosure, the subframe further includes a plurality of connection supports. Each of the plurality of connection supports is connected between the first cross member and the corresponding subframe longitudinal member, and is located at a connection corner where the first cross member is connected to the corresponding subframe longitudinal member.

According to some embodiments of the present disclosure, a plurality of connection bases are provided. At least one of the plurality of connection bases is connected to the connection support that is connected to the corresponding subframe longitudinal member.

According to some embodiments of the present disclosure, the subframe further includes a plurality of suspension mounting plates fixedly disposed at the first cross member and sequentially arranged in the second direction. The plurality of connection bases are in one-to-one correspondence with the plurality of suspension mounting plates and cooperate with the plurality of suspension mounting plates. Each of the plurality of connection bases and a corresponding one of the plurality of suspension mounting plates are opposite to and spaced apart from each other, to define a suspension mounting space.

According to some embodiments of the present disclosure, two connection bases are provided and two suspension mounting plates are provided. The two connection bases are sequentially arranged in the second direction. The two suspension mounting plates are located between the two connection bases.

According to some embodiments of the present disclosure, the first cross member has longitudinal member mounting holes, each of the plurality of subframe longitudinal members extending through a corresponding one of the longitudinal member mounting holes.

According to some embodiments of the present disclosure, a cross-sectional shape of the subframe longitudinal member matches a shape of the longitudinal member mounting hole.

According to some embodiments of the present disclosure, in the first direction, at least one of the plurality of subframe longitudinal members extends beyond a front side of the first cross member.

According to some embodiments of the present disclosure, a length dimension by which the subframe longitudinal member extends beyond the front side of the first cross member is L6, where 8 mm≤L6≤12 mm.

According to some embodiments of the present disclosure, a cross-section of the first cross member is of a rectangle. Two long sides of the rectangle are opposite to and spaced apart from each other in the first direction. Two short sides of the rectangle are opposite to and spaced apart from each other in a third direction of the subframe. A long side dimension of the rectangle is L7, and a short side dimension of the rectangle is L8, satisfying: 70 mm≤L7≤85 mm, and 50 mm≤L8<65 mm.

According to some embodiments of the present disclosure, the first cross member has a cross member front side wall and a cross member rear side wall that are opposite to and spaced apart from each other in the first direction. The subframe longitudinal member penetrating the first cross member penetrates both the cross member front side wall and the cross member rear side wall, and is fixedly connected to both the cross member front side wall and the cross member rear side wall.

The vehicle body assembly according to the embodiments of the present disclosure includes: a vehicle body having a vehicle body longitudinal member; and the above-described subframe fixedly disposed at the vehicle body longitudinal member and located below the vehicle body longitudinal member.

The vehicle according to the embodiments of the present disclosure includes the above-described vehicle body assembly.

Additional aspects and advantages of the present disclosure will be provided in part in the following description, or will in part become apparent from the following description, or be learned from practicing of the present disclosure.

Other aspects will be understood upon reading and comprehending the accompanying drawings and detailed description.

### BRIEF DESCRIPTION OF THE DRAWINGS

FIG. 1 is a schematic perspective structural view of a subframe according to an embodiment of the present disclosure.
FIG. 2 is a front view of a subframe according to an embodiment of the present disclosure.
FIG. 3 is a schematic assembly view of a subframe and a suspension according to an embodiment of the present disclosure.
FIG. 4 is a schematic assembly view of a subframe and a vehicle body longitudinal member according to an embodiment of the present disclosure.

### Reference numerals of the accompanying drawings:

first cross member 10; longitudinal member mounting hole 11; cross member front side wall 12; cross member rear side wall 13;
second cross member 20;
subframe longitudinal member 30;
vehicle body 40; vehicle body longitudinal member 41;
connection base 50; mounting end wall 51; suspension mounting hole 52; mounting ring 53; mounting portion 54; front end wall 55; avoidance groove structure 56; connection support 57; suspension mounting plate 58;
powertrain 200.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

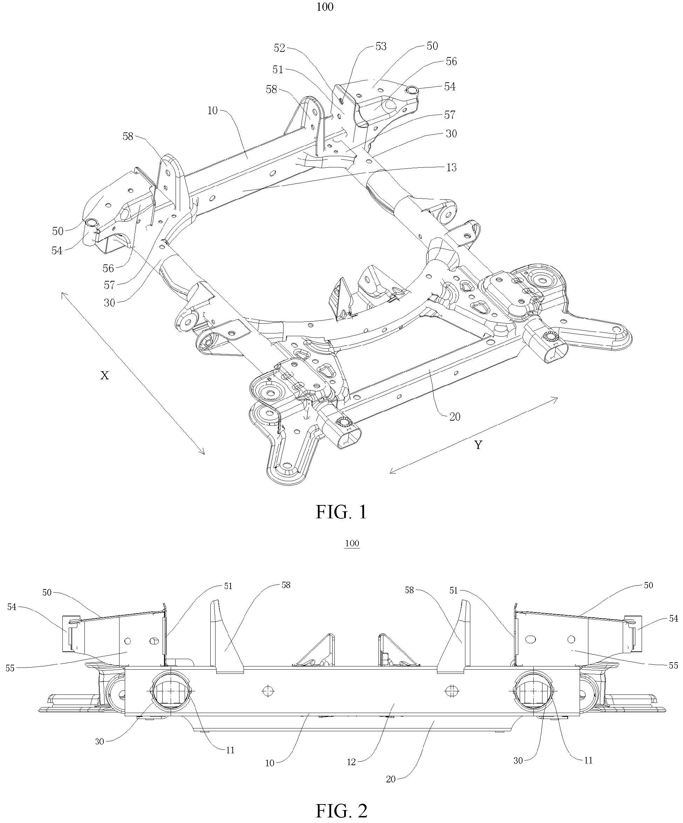

A subframe 100 of a vehicle, a vehicle body assembly, and the vehicle according to the embodiments of the present disclosure are described below with reference to FIG. 1 to FIG. 4. The subframe 100 may be a front subframe of the vehicle, and the present disclosure takes the subframe 100 serving as the front subframe as an example for illustration.

As illustrated in FIG. 1, the subframe 100 according to the embodiments of the present disclosure includes: a first cross member 10 and a second cross member 20 that are spaced apart from each other in a first direction of the subframe 100, the first cross member 10 being located at a front side of the second cross member 20; a plurality of subframe longitudinal members 30 arranged in a second direction of the subframe 100, each of the plurality of subframe longitudinal members 30 being connected to the first cross member 10 and the second cross member 20, at least one of the plurality of subframe longitudinal members 30 penetrating the first cross member 10, and the first direction being perpendicular to the second direction; and a connection base 50 fixedly connected to both the first cross member 10 and a corresponding subframe longitudinal member 30, where the connection base 50 is also adapted to be fixedly connected to a vehicle body longitudinal member 41 of the vehicle, and configured to mount a suspension.

The subframe 100 may be formed by welding section bars with a circular cross-section, a waist-shaped cross-section, and a rectangular cross-section, without a need for molds, which greatly saves mold costs and thus reduces manufacturing costs of the subframe 100. The subframe 100 may include the first cross member 10 and the second cross member 20 that are spaced apart from each other in the first direction of the subframe 100. The first direction of the subframe 100 refers to an X direction in FIG. 1, and the first cross member 10 and the second cross member 20 are spaced apart from each other in the first direction. The subframe 100 may have the plurality of subframe longitudinal members 30. For example, the subframe 100 may have two, three, four or more subframe longitudinal members 30, but the present disclosure is not limited thereto. The subframe 100 may also have other numbers of subframe longitudinal members 30, as long as the subframe 100 has the plurality of subframe longitudinal members 30. The present disclosure takes a scenario where the subframe 100 has two subframe longitudinal members 30 as an example for illustration.

As illustrated in FIG. 1, the X direction may be the first direction, a Y direction may be the second direction, and the first direction is perpendicular to the second direction. The plurality of subframe longitudinal members 30 each extend in the first direction and are arranged in the second direction of the subframe 100. Two adjacent subframe longitudinal members of the plurality of subframe longitudinal members 30 are spaced apart from each other in the second direction. Each of the plurality of subframe longitudinal members 30 is connected to the first cross member 10 and the second cross member 20. It should be noted that the first direction refers to a length direction of the vehicle, the second direction refers to a width direction of the vehicle, and the first direction is perpendicular to the second direction.

In an exemplary embodiment of the present disclosure, one end of the subframe longitudinal member 30 may be connected to the first cross member 10, and the other end of the subframe longitudinal member 30 may be connected to the second cross member 20. For example, the subframe longitudinal member 30 may be welded to the first cross member 10 and the second cross member 20, or the subframe longitudinal member 30 may be bolted to the first cross member 10 and the second cross member 20, but the present disclosure is not limited thereto. The subframe longitudinal member 30 may be connected to the first cross member 10 and the second cross member 20 in other manners, as long as each of the plurality of subframe longitudinal members 30 is connected between the first cross member 10 and the second cross member 20. Thus, each of the plurality of subframe longitudinal members 30 is connected between the first cross member 10 and the second cross member 20. In this way, a frame-type structure can be formed among the subframe longitudinal member 30, the first cross member 10, and the second cross member 20, which can further improve structural rigidity and strength of the subframe 100, further enhancing safety performance of the vehicle.

At least one of the plurality of subframe longitudinal members 30 penetrates the first cross member 10. For example, one subframe longitudinal member 30 may penetrate the first cross member 10, or two subframe longitudinal members 30 may penetrate the first cross member 10, but the present disclosure is not limited thereto. Other numbers of subframe longitudinal members 30 may also penetrate the first cross member 10, as long as at least one of the plurality of subframe longitudinal members 30 penetrates the first cross member 10. Such an arrangement can further improve the rigidity of the subframe 100, thus enhancing the safety performance of the vehicle.

The connection base 50 is fixedly connected to both the cross member 10 and the corresponding subframe longitudinal member 30. The connection base 50 is also adapted to be fixedly connected to the vehicle body longitudinal member 41 of the vehicle. For example, the connection base 50 may be welded to the first cross member 10 and the corresponding subframe longitudinal member 30, or the connection base 50 may be bolted to the first cross member 10 and the corresponding subframe longitudinal member 30. The connection base 50 may be welded to the vehicle body longitudinal member 41 of the vehicle, or the connection base 50 may be bolted to the vehicle body longitudinal member 41 of the vehicle, but the present disclosure is not limited thereto. The connection base 50 may also be connected to the first cross member 10 and the corresponding subframe longitudinal member 30 in other manners, and the connection base 50 may also be connected to the vehicle body longitudinal member 41 of the vehicle in other manners, as long as the connection base 50 is fixedly connected to both the first cross member 10 and the corresponding subframe longitudinal member 30, and the connection base 50 is fixedly connected to the vehicle body longitudinal member 41 of the vehicle. Thus, the connection base 50 is fixedly connected to the first cross member 10, the corresponding subframe longitudinal member 30, and the vehicle body longitudinal member 41 of the vehicle, which enables formation of a rigid fixed connection structure, improving the rigidity of the subframe 100, and further enhancing the safety performance of the vehicle.

The connection base 50 may be configured to have the suspension mounted thereon. For example, the connection base 50 may be fixedly connected to the suspension by bolting, or the connection base 50 may be engaged with the suspension, but the present disclosure is not limited thereto. The connection base 50 may also be connected to the suspension in other manners, as long as the connection base 50 is configured to mount the suspension. The connection base 50 may have a trapezoidal cross-section structure, which facilitates improving rigidity of the connection base 50, thus enhancing the safety performance of the vehicle.

According to the embodiments of the present disclosure, the subframe 100 of the vehicle can be in a frame-type structure by connecting the plurality of subframe longitudinal members 30 between the first cross member 10 and the second cross member 20, thus improving fatigue strength and the rigidity of the subframe 100. Also, at least one of the plurality of subframe longitudinal members 30 penetrates the first cross member 10, which can also improve the fatigue strength and the rigidity of the subframe 100. The connection base 50 is fixedly connected to the first cross member 10, the corresponding subframe longitudinal member 30, and the vehicle body longitudinal member 41 of the vehicle, such that a rigid fixed connection structure can be formed, to further improve the rigidity of the subframe 100 and further enhance the safety performance of the vehicle. In addition, after a powertrain 200 of the vehicle is mounted to the connection base 50 through the suspension, transmission of vibration and noise from the powertrain 200 to a passenger compartment can be effectively suppressed, thus improving riding comfort of passengers.

According to some embodiments of the present disclosure, as illustrated in FIG. 1, a plurality of connection bases 50 are provided. The plurality of connection bases 50 are sequentially arranged in the second direction and fixedly disposed at the first cross member 10. The plurality of connection bases 50 are connected in one-to-one correspondence with the plurality of subframe longitudinal members 30.

The plurality of connection bases 50 may be provided. For example, two, three, four and the like connection bases 50 may be provided, but the present disclosure is not limited thereto. Other numbers of connection bases 50 may also be possible, as long as the plurality of connection bases 50 are provided. The plurality of connection bases 50 are sequentially arranged in the second direction and fixedly disposed at the first cross member 10. For example, each of the plurality of connection bases 50 may be welded to the first cross member 10, or each of the plurality of connection bases 50 may be bolted to the first cross member 10, but the present disclosure is not limited thereto. Each of the plurality of connection bases 50 may be connected to the first cross member 10 in other manners, as long as the plurality of connection bases 50 are sequentially arranged in the second direction and fixedly disposed at the first cross member 10.

The plurality of connection bases 50 are connected in one-to-one correspondence with the plurality of subframe longitudinal members 30. For example, the connection base 50 may be welded to the corresponding subframe longitudinal member 30, or the connection base 50 may be bolted to the corresponding subframe longitudinal member 30, but the present disclosure is not limited thereto. The connection base 50 may also be connected to the corresponding subframe longitudinal member 30 in other manners, as long as the plurality of connection bases 50 are connected in one-to-one correspondence with the plurality of subframe longitudinal members 30. Thus, the plurality of connection bases 50 are sequentially arranged in the second direction and fixedly disposed at the first cross member 10, and the plurality of connection bases 50 are connected in one-to-one correspondence with the plurality of subframe longitudinal members 30, which enables formation of a rigid fixed connection structure, further improving the rigidity of the subframe 100. Also, the transmission of the vibration and the noise from the powertrain 200 to the passenger compartment can be effectively suppressed, thus improving the riding comfort of the passengers.

According to some embodiments of the present disclosure, as illustrated in FIG. 1 and FIG. 2, each of the plurality of subframe longitudinal members 30 penetrates the first cross member 10. The connection base 50 is at least partially located above an overlapping region where the corresponding subframe longitudinal member 30 overlaps the first cross member 10.

Each of the plurality of subframe longitudinal members 30 penetrates the first cross member 10, which can further improve the rigidity of the subframe 100. The connection base 50 is at least partially located above the overlapping region where the corresponding subframe longitudinal member 30 overlaps the first cross member 10. For example, the connection base 50 is entirely located above the overlapping region where the corresponding subframe longitudinal member 30 overlaps the first cross member 10, or half of the connection base 50 is located above the overlapping region where the corresponding subframe longitudinal member 30 overlaps the first cross member 10, or one third of the connection base 50 is located above the overlapping region where the corresponding subframe longitudinal member 30 overlaps the first cross member 10, but the present disclosure is not limited thereto. In some embodiments, another portion of the connection base 50 may also be located above the overlapping region where the corresponding subframe longitudinal member 30 overlaps the first cross member 10, as long as the connection base 50 is at least partially located above the overlapping region where the corresponding subframe longitudinal member 30 overlaps the first cross member 10. Thus, each of the plurality of subframe longitudinal members 30 penetrates the first cross member 10, and the connection base 50 is at least partially located above the overlapping region where the corresponding subframe longitudinal member 30 overlaps the first cross member 10, which improves structural strength at a position where the connection base 50 is mounted to the first cross member 10, thus improving structural stability of the connection base 50, further improving the rigidity of the subframe 100, and enhancing the safety performance of the vehicle.

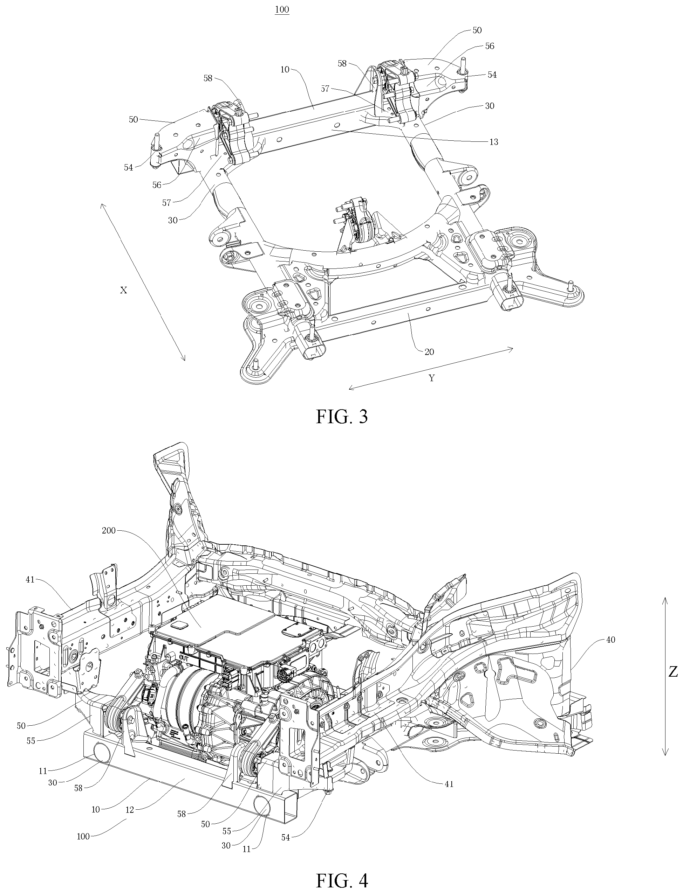

According to some embodiments of the present disclosure, as illustrated in FIG. 4, in a third direction of the subframe 100, an orthographic projection of the subframe longitudinal member 30 overlaps an orthographic projection of the first cross member 10 to form a projection overlapping region. An orthographic projection of the connection base 50 overlaps the projection overlapping region. The third direction, the first direction, and the second direction are perpendicular to each other.

As illustrated in FIG. 1 and FIG. 4, the first direction may be the X direction in FIG. 1, the second direction may be the Y direction in FIG. 1, and the third direction may be the Z direction in FIG. 4. Also, the third direction, the first direction, and the second direction are perpendicular to each other.

In the third direction of the subframe 100, the orthographic projection of the subframe longitudinal member 30 overlaps the orthographic projection of the first cross member 10 to form the projection overlapping region, that is, the subframe longitudinal member 30 overlaps the first cross member 10, in such a manner that the rigidity of the subframe 100 is improved. The orthographic projection of the connection base 50 overlaps the projection overlapping region, that is, the connection base 50 overlaps both the subframe longitudinal member 30 and the first cross member 10, in such a manner that the rigidity of the subframe 100 can be further improved, thus enhancing the safety performance of the vehicle.

According to some embodiments of the present disclosure, as illustrated in FIG. 2 and FIG. 3, the connection base 50 may define a cavity structure. In the second direction, an inside end wall of the connection base 50 serves as a mounting end wall 51 for mounting the suspension. The mounting end wall 51 is perpendicular to the first cross member 10.

The connection base 50 may define the cavity structure, which can improve rigidity and structural strength of the connection base 50. In an exemplary embodiment of the present disclosure, the cavity structure of the connection base 50 may be formed by stamping and folding two plates, featuring a simple structure that reduces the number of components of the connection base 50, thus lowering manufacturing costs of the connection base 50, and further reducing the manufacturing costs of the subframe 100. In the second direction, the connection base 50 is disposed at a position adjacent to an end of the first cross member 10. An end wall of the connection base 50 at a side adjacent to a midpoint of the first cross member 10 may serve as an inside end wall, and the inside end wall of the connection base 50 serves as the mounting end wall 51 for mounting the suspension. The mounting end wall 51 is perpendicular to the first cross member 10. In this way, the rigidity of the connection base 50 can be improved. After the suspension is mounted to the connection base 50, the transmission of the vibration and the noise from the powertrain 200 to the passenger compartment can be more effectively suppressed, thus further improving the riding comfort of the passengers.

According to some embodiments of the present disclosure, as illustrated in FIG. 1, the mounting end wall 51 may have a suspension mounting hole 52, and the cavity structure has a mounting ring 53 in the cavity structure. The mounting ring 53 is disposed at the mounting end wall 51 and arranged to correspond to the suspension mounting hole 52. The mounting ring 53 has an internal thread on an inner circumferential wall of the mounting ring 53.

The mounting end wall 51 may have the suspension mounting hole 52 configured for mounting the suspension. In an exemplary embodiment of the present disclosure, a bolt may extend through the suspension mounting hole 52 to mount the suspension, and a plurality of suspension mounting holes 52 may be provided to enable the suspension to be mounted at the mounting end wall 51 more stably. The cavity structure may have the mounting ring 53 in the cavity structure. The mounting ring 53 may be a nut or other annular structure, as long as the the mounting ring 53 is disposed in the cavity structure. The mounting ring 53 may be welded to the mounting end wall 51 and arranged to correspond to the suspension mounting hole 52. Also, the mounting ring 53 has the internal thread on the inner circumferential wall of the mounting ring 53. When the suspension is mounted to the mounting end wall 51, the bolt is facilitated to extend through the suspension mounting hole 52 and the mounting ring 53 sequentially, enabling the bolt to be fitted and fixed to the internal thread of the mounting ring 53, and thus enabling the suspension to be mounted to the connection base 50.

According to some embodiments of the present disclosure, as illustrated in FIG. 1, in the second direction, the connection base 50 is provided with a mounting portion 54 at an outer end of the connection base 50. The mounting portion 54 is connected to the vehicle body longitudinal member 41.

In the second direction, the connection base 50 may be provided with the mounting portion 54 at the outer end of the connection base 50. For example, the connection base 50 may be welded to the mounting portion 54, or the connection base 50 may be bolted to the mounting portion 54, but the present disclosure is not limited thereto. The connection base 50 may also be connected to the mounting portion 54 in other manners, as long as the connection base 50 is provided with the mounting portion 54 at the outer end of the connection base 50. The mounting portion 54 is connected to the vehicle body longitudinal member 41. For example, the mounting portion 54 may be connected to the vehicle body longitudinal member 41 by a plug-in connection, or the mounting portion 54 may be connected to the vehicle body longitudinal member 41 by a bolt connection, but the present disclosure is not limited thereto. The mounting portion 54 may also be connected to the vehicle body longitudinal member 41 in other manners, as long as the mounting portion 54 is connected to the vehicle body longitudinal member 41.

Thus, the connection base 50 can be connected to the vehicle body longitudinal member 41 through the mounting portion 54. Due to high rigidity of the vehicle body longitudinal member 41, connection between the connection base 50 and the vehicle body longitudinal member 41 can form a robust rigid fixed connection structure, which in turn enhances the rigidity and the strength of the subframe 100, thus enhancing the safety performance of the vehicle.

According to some embodiments of the present disclosure, as illustrated in FIG. 1 to FIG. 3, the mounting portion 54 may be a mounting tube.

The mounting portion 54 may be the mounting tube. When the connection base 50 is connected to the vehicle body longitudinal member 41, the bolt can extend through the mounting tube and is connected to the vehicle body longitudinal member 41, enabling the connection base 50 to be fixedly connected to the vehicle body longitudinal member 41. Thus, the connection between the connection base 50 and the vehicle body longitudinal member 41 can be achieved, further realizing connection of the subframe 100 to the vehicle body longitudinal member 41.

According to some embodiments of the present disclosure, as illustrated in FIG. 2 and FIG. 4, in the first direction, a front end wall 55 of the connection base 50 may be of an arc shape.

In the first direction, the front end wall 55 of the connection base 50 may be of an arc shape. In an exemplary embodiment of the present disclosure, the front end wall 55 may be an arc-shaped plate, and the remaining four faces may be formed from a single plate by stamping and folding. Thus, the connection base 50 may be a pentahedral structure formed by two plates welded together. The connection base 50 features a simple structure, which can simplify component composition of the subframe 100, thus reducing the manufacturing costs of the subframe 100.

According to some embodiments of the present disclosure, as illustrated in FIG. 3, in the second direction, a cross-sectional area of the connection base 50 decreases gradually from an inner side of the connection base 50 to an outer side of the connection base 50.

In the second direction, the connection base 50 is disposed adjacent to an end position of the first cross member 10. The end wall of the connection base 50 at a side adjacent to the midpoint of the first cross member 10 may serve as the inside end wall. In the second direction, the cross-sectional area of the connection base 50 may decrease gradually from the inside end wall of the connection base 50 to the outer end of the connection base 50. On the premise of not affecting a connection effect of the connection base 50, a gradual reduction in the cross-sectional area of the connection base 50 from the inside end wall to the outer end of the connection base 50 can reduce a volume of the connection base 50, which in turn helps to reduce a volume of the subframe 100. After the subframe 100 is mounted at the vehicle, a mounting space can be saved, and a weight of the connection base 50 can also be reduced, thus reducing a weight of the subframe 100, and further facilitating a lightweight design of the vehicle.

According to some embodiments of the present disclosure, as illustrated in FIG. 3, a cross-section of the connection base 50 may be of a polygonal shape.

The cross-section of the connection base 50 may be of a polygonal shape. For example, the cross-section of the connection base 50 may be a trapezoid, a pentagon and the like. Such an arrangement facilitates to enhance the rigidity of the connection base 50.

According to some embodiments of the present disclosure, as illustrated in FIG. 1 and FIG. 3, an avoidance groove structure 56 may be formed at the connection base 50 and is adapted to correspond to a fastener configured for connection of the suspension. The avoidance groove structure 56 is configured to avoid a disassembly tool.

The avoidance groove structure 56 may be formed at the connection base 50. The avoidance groove structure 56 may be formed at an outer circumferential wall of the connection base 50. The avoidance groove structure 56 may be an arc-shaped groove, a square groove, and the like, but the present disclosure is not limited thereto. The avoidance groove structure 56 may also be a groove structure of other shapes, as long as the avoidance groove structure 56 is capable of performing an avoidance function.

The powertrain 200 is connected to the suspension through a fastener. The fastener may be a bolt. In the second direction, the avoidance groove structure 56 is arranged to correspond to the fastener that connects the suspension to the powertrain 200. When the powertrain 200 mounted at the suspension needs to be disassembled, the avoidance groove structure 56 is configured to avoid the disassembly tool. For example, when the suspension requires maintenance, the powertrain 200 of the vehicle may first be hoisted by a movable hoisting device, then the fastener between the suspension and the powertrain 200 of the vehicle may be removed at a position of the avoidance groove structure 56 using the disassembly tool, and subsequently a connection member between the suspension and the connection base 50 may be removed. In this way, replacement of the suspension can be achieved without disassembling the subframe 100, which reduces the number of components to be disassembled and maintenance man-hour costs, thus reducing maintenance costs of the vehicle. Also, a risk that the disassembly tool collides with and scratches components disposed at other positions can be avoided, further enhancing the safety performance of the vehicle.

According to some embodiments of the present disclosure, as illustrated in FIG. 1 and FIG. 3, the subframe 100 may further include a plurality of connection supports 57. Each of the plurality of connection supports 57 is connected between the first cross member 10 and the corresponding subframe longitudinal member 30, and is located at a connection corner where the first cross member 10 is connected to the corresponding subframe longitudinal member 30.

The subframe 100 may further include the plurality of connection supports 57. For example, the number of the connection supports 57 may be two, three, four, five, etc., but the present disclosure is not limited thereto. Other numbers of the connection support 57 may also be possible, as long as the subframe 100 has the plurality of connection supports 57. Each of the plurality of connection supports 57 is connected between the first cross member 10 and the corresponding subframe longitudinal member 30. That is, the connection support 57 is connected to both the first cross member 10 and the corresponding subframe longitudinal member 30. For example, the connection support 57 may be welded to both the first cross member 10 and the corresponding subframe longitudinal member 30, or the connection support 57 may be bolted to both the first cross member 10 and the corresponding subframe longitudinal member 30, but the present disclosure is not limited thereto. The connection support 57 may also be connected to both the first cross member 10 and the corresponding subframe longitudinal member 30 in other manners, as long as each of the plurality of connection supports 57 is connected between the first cross member 10 and the corresponding subframe longitudinal member 30. In addition, each of the plurality of connection supports 57 is located at the connection corner where the first cross member 10 is connected to the corresponding subframe longitudinal member 30. In the present disclosure, the connection support 57 is connected between the cross member 10 and each of the plurality of subframe longitudinal members 30. For example, two connection supports 57 and two subframe longitudinal members 30 are provided, each of the two connection supports 57 is connected between the first cross member 10 and a corresponding one of the two subframe longitudinal members 30. By providing the connection support 57, the rigidity and the strength of the subframe 100 can be improved, thus enhancing the safety performance of the vehicle.

According to some embodiments of the present disclosure, as illustrated in FIG. 1 and FIG. 4, the plurality of connection bases 50 may be provided. The plurality of connection bases 50 are sequentially arranged in the second direction. At least one of the plurality of connection bases 50 is connected to the connection support 57 that is connected to the corresponding subframe longitudinal member 30.

The plurality of connection bases 50 may be provided. For example, the number of the connection bases 50 may be two, three, four, etc., but the present disclosure is not limited thereto. Other numbers of the connection base 50 may also be possible, as long as the plurality of connection bases 50 are provided. The plurality of connection bases 50 may be sequentially arranged in the second direction, and at least one of the plurality of connection bases 50 is connected to the connection support 57 that is connected to the corresponding subframe longitudinal member 30. For example, one connection base 50 may be connected to the connection support 57 that is connected to the corresponding subframe longitudinal member 30, or two connection bases 50 may be connected to the connection supports 57 that are respectively connected to the corresponding subframe longitudinal members 30, but the present disclosure is not limited thereto. Other numbers of the connection bases 50 may also be connected to the connection support 57 that is connected to the corresponding subframe longitudinal member 30, as long as at least one of the plurality of connection bases 50 is connected to the connection support 57 that is connected to the corresponding subframe longitudinal member 30.

The present disclosure is described by way of example in which two connection bases 50 are provided, and one connection base 50 is connected to the connection support 57 that is connected to the corresponding subframe longitudinal member 30. In an exemplary embodiment of the present disclosure, the two connection bases 50 are disposed adjacent to both ends of the first cross member 10, respectively. After the subframe 100 is mounted at the vehicle, since a left side mounting space is insufficient, in the second direction, the connection base 50 at a left end of the subframe 100 is connected to the connection support 57 that is connected to the corresponding subframe longitudinal member 30, thus the left connection base 50 is arranged more adjacent to a middle part of the subframe 100. The connection base 50 at a right end of the subframe 100 is not connected to the connection support 57 that is connected to the corresponding subframe longitudinal member 30, which enables the subframe 100 to be mounted at the vehicle smoothly. In addition, the connection base 50 is connected to the connection support 57 that is connected to the corresponding subframe longitudinal member 30, which can further enhance the rigidity of the connection base 50, thus effectively suppressing the transmission of the vibration and the noise from the powertrain 200 of the vehicle to the passenger compartment, and further improving the riding comfort of occupants.

According to some embodiments of the present disclosure, as illustrated in FIG. 1 and FIG. 2, the subframe 100 may further include a plurality of suspension mounting plates 58 fixedly disposed at the first cross member 10 and sequentially arranged in the second direction. The plurality of connection bases 50 are in one-to-one correspondence with the plurality of suspension mounting plates 58 and cooperate with the plurality of suspension mounting plates 58. Each of the plurality of connection bases 50 and a corresponding one of the plurality of suspension mounting plates 58 are opposite to and spaced apart from each other, to define a suspension mounting space.

The subframe 100 may further include the plurality of suspension mounting plates 58. The number of the suspension mounting plates 58 may be two, three, four, etc., but the present disclosure is not limited thereto. Other numbers of the suspension mounting plate 58 may also be employed, as long as the subframe 100 has the plurality of suspension mounting plates 58. The number of the suspension mounting plates 58 may be the same as the number of the connection bases 50.

The plurality of suspension mounting plates 58 are fixedly disposed at the first cross member 10 and sequentially arranged in the second direction. For example, the suspension mounting plate 58 may be welded to the first cross member 10, or the suspension mounting plate 58 may be bolted to the first cross member 10, but the present disclosure is not limited thereto. The suspension mounting plate 58 may also be connected to the first cross member 10 in other manners, as long as the plurality of suspension mounting plates 58 are fixedly disposed at the first cross member 10.

The plurality of connection bases 50 are in one-to-one correspondence with the plurality of suspension mounting plates 58 and cooperate with the plurality of suspension mounting plates 58. That is, the number of the connection bases 50 is the same as the number of the suspension mounting plates 58. Each of the connection bases 50 and the corresponding one of the plurality of suspension mounting plates 58 are opposite to and spaced apart from each other, to define the suspension mounting space between the connection base 50 and the corresponding suspension mounting plate 58. In this way, the suspension is mounted in the suspension mounting space. Thus, a suspension mounting frame is defined by the connection base 50 and the corresponding one of the plurality of suspension mounting plates 58. The suspension is mounted in the suspension mounting space, and a bolt extends through the suspension mounting plate 58 and the suspension, and is connected to the connection base 50. This configuration allows the suspension to be more stably mounted at the subframe 100, thus improving mounting stability of the suspension.

According to some embodiments of the present disclosure, as illustrated in FIG. 1, two connection bases 50 are provided and two suspension mounting plates 58 are provided. The two connection bases 50 are sequentially arranged in the second direction. The two suspension mounting plates 58 are arranged between the two connection bases 50.

The two connection bases 50 may be provided and the two suspension mounting plates 58 may be provided. The two connection bases 50 are sequentially arranged in the second direction, and are respectively disposed adjacent to the ends of the first cross member 10. The two suspension mounting plates 58 are located between the two connection bases 50, and are respectively disposed adjacent to the corresponding connection bases 50. Thus, the two connection bases 50 are in one-to-one correspondence with the two suspension mounting plates 58, such that the first cross member 10 has a plurality of suspension mounting points, allowing more suspensions to be mounted at the subframe 100. In this way, the powertrain 200 is facilitated to be mounted at the vehicle, and the suspension can be mounted at the subframe 100 more stably, thus improving the mounting stability of the suspension. Since each of a plurality of suspensions for mounting the powertrain 200 is mounted between the connection base 50 and the suspension mounting plate 58 of the subframe 100, intrusion of the powertrain 200 into the passenger compartment during a vehicle collision can be reduced, thereby enhancing the safety performance of the vehicle.

According to some embodiments of the present disclosure, as illustrated in FIG. 2, the first cross member 10 has longitudinal member mounting holes 11. The subframe longitudinal member 30 extends through a corresponding longitudinal member mounting hole 11.

The first cross member 10 has the longitudinal member mounting holes 11. Each of the longitudinal member mounting hole 11 is configured for assembly of the subframe longitudinal member 30, and the subframe longitudinal member 30 extends through the corresponding longitudinal member mounting hole 11. The subframe longitudinal member 30 may be connected to the first cross member 10 by welding. In an exemplary embodiment of the present disclosure, the subframe longitudinal member 30 first extends through the corresponding longitudinal member mounting hole 11, welding may be performed on a front joint surface and a rear joint surface where the subframe longitudinal member 30 is joined with the first cross member 10, and the subframe longitudinal member 30 is fixedly connected to the first cross member 10 by welding. Nested connection between the subframe longitudinal member 30 and the first cross member 10 can constrain degrees of freedom of two surfaces of the first cross member 10, enhance longitudinal rigidity of the first cross member 10 in the first direction, reduce a risk of swaying of the first cross member 10 when subjected to a load applied in the first direction, and improve overall structural stability of the subframe 100. By providing the longitudinal member mounting holes 11 at the first cross member 10, an effect of the subframe longitudinal member 30 extending through the first cross member 10 is achieved, which facilitates the assembly of the first cross member 10 and the subframe longitudinal member 30 and improves production efficiency of the subframe 100.

In some embodiments of the present disclosure, as illustrated in FIG. 2, a cross-sectional shape of the subframe longitudinal member 30 matches a shape of the longitudinal member mounting hole 11.

A cross-section of the subframe longitudinal member 30 may be rectangular, circular, or the like.. The longitudinal member mounting hole 11 is rectangular, circular or the like, to match the the cross-section of the subframe longitudinal member 30. The present disclosure takes a scenario where the cross-section of the subframe longitudinal member 30 is circular as an example for illustration. The cross-section of the subframe longitudinal member 30 may be a circular cross-sectional structure with a diameter of 60 mm, and the longitudinal member mounting hole 11 is constructed as the circular shape conforming to the cross-section of the subframe longitudinal member 30. Such an arrangement enables the cross-sectional shape of the subframe longitudinal member 30 to conform to the shape of the longitudinal member mounting hole 11. Such configuration can improve assembly tightness between the subframe longitudinal member 30 and the first cross member 10 when the subframe longitudinal member 30 extends through the corresponding longitudinal member mounting hole 11. When the subframe longitudinal member 30 is welded to the first cross member 10, quality of welding is improved, a risk of fracture and detachment of the subframe longitudinal member 30 at the longitudinal member mounting hole 11 is reduced, and reliability of the nested connection between the subframe longitudinal member 30 and the first cross member 10 is improved, thus further improving the overall structural stability of the subframe 100.

In some embodiments of the present disclosure, as illustrated in FIG. 2 and FIG. 4, in the first direction, at least one of the plurality of subframe longitudinal members 30 extends beyond a front side of the first cross member 10.

In the first direction, that is, in the X direction in FIG. 1, at least one of the plurality of subframe longitudinal members 30 extends beyond the front side of the first cross member 10. Taking two subframe longitudinal members 30 as an example for illustration, a left subframe longitudinal member 30 extends beyond the front side of the first cross member 10, or a right subframe longitudinal member 30 extends beyond the front side of the first cross member 10, or each of the left subframe longitudinal member 30 and the right subframe longitudinal member 30 extends beyond the front side of the first cross member 10. The present disclosure takes a scenario where each of the left subframe longitudinal member 30 and the right subframe longitudinal member 30 extends beyond the front side of the first cross member 10 as an example for illustration. When the subframe longitudinal member 30 is assembled and connected to the first cross member 10 by welding, the subframe longitudinal member 30 extends beyond the front side of the first cross member 10 to facilitate stable clamping, which improves stability of the welding and facilitates to improve the quality of the welding, further reducing the risk of the fracture and the detachment of the subframe longitudinal member 30 at the longitudinal member mounting hole 11, and further improving the reliability of the nested connection between the subframe longitudinal member 30 and the first cross member 10.

In some embodiments of the present disclosure, as illustrated in FIG. 2, a length dimension by which the subframe longitudinal member 30 extends beyond the front side of the first cross member 10 is L6, where: 8 mm≤L6≤12 mm.

The length dimension by which the subframe longitudinal member 30 extends beyond the front side of the first cross member 10 is L6. The length dimension L6 by which the subframe longitudinal member 30 extends beyond the front side of the first cross member 10 satisfies: 8 mm≤L6≤12 mm. The length dimension L6 by which the subframe longitudinal member 30 extends beyond the front side of the first cross member 10 may be 8 mm, 10 mm, or 12 mm, etc. The present disclosure takes a scenario where L6 is 10 mm as an example for illustration. The length dimension L6 by which the subframe longitudinal member 30 extends beyond the front side of the first cross member 10 is 10 mm, which facilitates chamfering of an extended end. On the one hand, an extension length of 10 mm allows for more stable clamping, improves the stability of the welding, reduces a risk of unstable clamping caused by an excessively short extension length, and helps improve the quality of the welding. Thus, the risk of the fracture and the detachment of the subframe longitudinal member 30 at the longitudinal member mounting hole 11 is reduced, and the reliability of the nested connection between the subframe longitudinal member 30 and the first cross member 10 is further improved. On the other hand, a risk of interference with other vehicle body assembly caused by an excessively long extension length is reduced, improving assembly efficiency.

In some embodiments of the present disclosure, as illustrated in FIG. 1 and FIG. 2, a cross-section of the first cross member 10 is of a rectangle. Two long sides of the rectangle are opposite to and spaced apart from each other in the first direction. Two short sides of the rectangle are opposite to and spaced apart from each other in the third direction of the subframe 100. A long side dimension of the rectangle is L7, and a short side dimension of the rectangle is L8, satisfying: 70 mm≤L7≤85 mm, and 50 mm≤L8<65 mm.

A cross-section of the second cross member 20 is of a rectangle. Two long sides of the rectangle are opposite to and spaced apart from each other in an X direction of the subframe 100. Two short sides of the rectangle are spaced apart from each other in a Z direction of the subframe 100, and the two short sides of the rectangle are opposite to each other in a height direction of the subframe 100. A long side dimension of the rectangle is L7, and a short side dimension of the rectangle is L8. The long side dimension L7 of the rectangle satisfies: 70 mm≤L7≤85 mm. The short side dimension L8 of the rectangle satisfies: 50 mm≤L8<65 mm. The short side dimension L8 of the rectangle extends in the X direction. The long side dimension L7 of the rectangle may be set to 70 mm, 75 mm, or 85 mm, etc., and the short side dimension L8 of the rectangle may be set to 50 mm, 55 mm, or 65 mm, etc. The present disclosure takes a scenario where the long side dimension L7 of the rectangle is set to 80 mm and the short side dimension L8 of the rectangle is set to 60 mm as an example for illustration. Setting the long side dimension L7 of the rectangle to 80 mm and the short side dimension L8 of the rectangle to 60 mm enables better matching with the subframe longitudinal member 30, reduces the risk of the fracture at the connection end caused by an excessively large or excessively small cross-sectional dimension of the first cross member 10, improves connection reliability between the longitudinal member mounting hole 11 and the corresponding subframe longitudinal member 30, thus improving operation safety of the vehicle.

In some embodiments of the present disclosure, as illustrated in FIG. 1 and FIG. 2, the first cross member 10 has a cross member front side wall 12 and a cross member rear side wall 13 that are opposite to and spaced apart from each other in the first direction. The subframe longitudinal member 30 penetrating the first cross member 10 penetrates both the cross member front side wall 12 and the cross member rear side wall 13, and is fixedly connected to both the cross member front side wall 12 and the cross member rear side wall 13.

The first cross member 10 has the cross member front side wall 12 and the cross member rear side wall 13 that are opposite to each other in the first direction and are spaced apart from each other. The subframe longitudinal member 30 penetrating the first cross member 10 penetrates both the cross member front side wall 12 and the cross member rear side wall 13, and is fixedly connected to both the cross member front side wall 12 and the cross member rear side wall 13. Such an arrangement further improves the connection stability between the subframe longitudinal member 30 and the first cross member 10, and further reduces the risk of the fracture and the detachment of the subframe longitudinal member 30 at the longitudinal member mounting hole 11. Also, freedom degree of the first cross member 10 is reliably constrained. When the first cross member 10 is subjected to an impact, swinging of the subframe 100 in the first direction is further reduced.

The vehicle body assembly according to the embodiments of the present disclosure includes the vehicle body 40 having the vehicle body longitudinal member 41. The vehicle body assembly also includes the subframe 100 in the above-described embodiments. The subframe 100 is fixedly disposed at the vehicle body longitudinal member 41 and located below the vehicle body longitudinal member 41. In this way, the fatigue strength and the rigidity of the subframe 100 can be improved, further enhancing the safety performance of the vehicle.

The vehicle according to the embodiments of the present disclosure includes the vehicle body assembly in above-described embodiments, which can improve the fatigue strength and the rigidity of the subframe 100, further enhancing the safety performance of the vehicle.

Reference throughout this specification to "an embodiment", "some embodiments", "schematic embodiments", "an example", "a specific example", or "some examples" means that a particular feature, structure, material, or characteristic described in connection with the embodiment or example is included in at least one embodiment or example of the present disclosure. In this specification, exemplary descriptions of above terms are not necessarily referring to the same embodiment or example. Further, the particular features, structures, materials, or characteristics can be combined in any suitable manner in one or more embodiments or examples.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

## Claims

1. A subframe of a vehicle, comprising:
a first cross member and a second cross member that are spaced apart from each other in a first direction of the subframe, the first cross member being located at a front side of the second cross member;
a plurality of subframe longitudinal members arranged in a second direction of the subframe, each of the plurality of subframe longitudinal members being connected to the first cross member and the second cross member, at least one of the plurality of subframe longitudinal members penetrating the first cross member, and the first direction being perpendicular to the second direction; and
a connection base fixedly connected to both the first cross member and a corresponding one of the plurality of subframe longitudinal members, wherein the connection base is further adapted to be fixedly connected to a vehicle body longitudinal member of the vehicle, and wherein the connection base is configured to have a suspension mounted thereon.

2. The subframe of the vehicle according to claim 1, wherein a plurality of connection bases are provided, wherein:
the plurality of connection bases are sequentially arranged in the second direction and fixedly disposed at the first cross member; and
the plurality of connection bases are connected in one-to-one correspondence with the plurality of subframe longitudinal members.

3. The subframe of the vehicle according to claim 1 or 2, wherein:
each of the plurality of subframe longitudinal members penetrates the first cross member; and
the connection base is at least partially located above an overlapping region where the corresponding subframe longitudinal member overlaps the first cross member.

4. The subframe of the vehicle according to claim 3, wherein:
in a third direction of the subframe, an orthographic projection of the subframe longitudinal member overlaps an orthographic projection of the first cross member to form a projection overlapping region;
an orthographic projection of the connection base overlaps the projection overlapping region; and
the third direction, the first direction, and the second direction are perpendicular to each other.

5. The subframe of the vehicle according to any one of claims 1 to 4, wherein:
the connection base defines a cavity structure; and
in the second direction, an inside end wall of the connection base serves as a mounting end wall for the mounting of the suspension, the mounting end wall being perpendicular to the first cross member.

6. The subframe of the vehicle according to claim 5, wherein:
the mounting end wall has a suspension mounting hole; and
the cavity structure has a mounting ring in the cavity structure, wherein:
the mounting ring is disposed at the mounting end wall and corresponds to the suspension mounting hole; and
the mounting ring has an internal thread on an inner circumferential wall of the mounting ring.

7. The subframe of the vehicle according to claim 5 or 6, wherein in the second direction, the connection base is provided with a mounting portion at an outer end of the connection base, the mounting portion being connected to the vehicle body longitudinal member.

8. The subframe of the vehicle according to claim 7, wherein the mounting portion is a mounting tube.

9. The subframe of the vehicle according to any one of claims 5 to 8, wherein in the first direction, a front end wall of the connection base is in an arc shape.

10. The subframe of the vehicle according to any one of claims 1 to 9, wherein in the second direction, a cross-sectional area of the connection base decreases gradually in a direction from an inner side of the connection base to an outer side of the connection base.

11. The subframe of the vehicle according to any one of claims 1 to 10, wherein a cross-section of the connection base is of a polygonal shape.

12. The subframe of the vehicle according to any one of claims 1 to 11, wherein the connection base has an avoidance groove structure, wherein the avoidance groove structure is adapted to correspond to a fastener for connecting the suspension, the avoidance groove structure being configured to avoid a disassembly tool.

13. The subframe of the vehicle according to any one of claims 1 to 12, further comprising a plurality of connection supports, wherein each of the plurality of connection supports is connected between the first cross member and the corresponding subframe longitudinal member, and is located at a connection corner where the first cross member is connected to the corresponding subframe longitudinal member.

14. The subframe of the vehicle according to claim 13, wherein a plurality of connection bases are provided, wherein at least one of the plurality of connection bases is connected to the connection support connected to the corresponding subframe longitudinal member.

15. The subframe of the vehicle according to claim 14, further comprising a plurality of suspension mounting plates fixedly disposed at the first cross member and sequentially arranged in the second direction, wherein:
the plurality of connection bases are in one-to-one correspondence with the plurality of suspension mounting plates and cooperate with the plurality of suspension mounting plates; and
each of the plurality of connection bases and a corresponding one of the plurality of suspension mounting plates are opposite to and spaced apart from each other to define a suspension mounting space.

16. The subframe of the vehicle according to claim 15, wherein two connection bases are provided and two suspension mounting plates are provided, wherein:
the two connection bases are sequentially arranged in the second direction; and
the two suspension mounting plates are located between the two connection bases.

17. The subframe of the vehicle according to any one of claims 1 to 16, wherein the first cross member has longitudinal member mounting holes, each of the plurality of subframe longitudinal members extending through a corresponding one of the longitudinal member mounting holes.

18. The subframe of the vehicle according to claim 17, wherein a cross-sectional shape of the subframe longitudinal member matches a shape of the longitudinal member mounting hole.

19. The subframe of the vehicle according to claim 17 or 18, wherein in the first direction, at least one of the plurality of subframe longitudinal members extends beyond a front side of the first cross member.

20. The subframe of the vehicle according to claim 19, wherein a length dimension by which the subframe longitudinal member extends beyond the front side of the first cross member is L6, where 8 mm≤L6≤12 mm.

21. The subframe of the vehicle according to any one of claims 17 to 20, wherein a cross-section of the first cross member is of a rectangle, wherein:
two long sides of the rectangle are opposite to and spaced apart from each other in the first direction;
two short sides of the rectangle are opposite to and spaced apart from each other in a third direction of the subframe; and
a long side dimension of the rectangle is L7, and a short side dimension of the rectangle is L8, where: 70 mm≤L7≤85 mm, and 50 mm≤L8<65 mm.

22. The subframe of the vehicle according to any one of claims 17 to 21, wherein:
the first cross member has a cross member front side wall and a cross member rear side wall that are opposite to and spaced apart from each other in the first direction; and
the subframe longitudinal member penetrating the first cross member penetrates both the cross member front side wall and the cross member rear side wall, and is fixedly connected to both the cross member front side wall and the cross member rear side wall.

23. A vehicle body assembly, comprising:
a vehicle body having a vehicle body longitudinal member;
a subframe fixedly disposed at the vehicle body longitudinal member and located below the vehicle body longitudinal member, the subframe being the subframe of the vehicle according to any one of claims 1 to 22.

24. A vehicle, comprising the vehicle body assembly according to claim 23.
